# EUROPÄISCHE PATENTANMELDUNG

(11) **EP 2 434 605 A1**
(43) Veröffentlichungstag der Anmeldung: **28.03.2012**
(21) Anmeldenummer: 10011139.2
(22) Anmeldetag: 28.09.2010
(51) Int. Cl.: H02J 3/00, H02J 3/14

(54) **Last-Management-System und Last-Management-Verfahren für elektrische Verbraucher**

(71) Anmelder: Landis + Gyr (Europe) AG, 6301 Zug (CH)
(72) Erfinder: Lendi, Dominic, 8925 Ebertswil (CH)
(74) Vertreter: Rentsch Partner AG

(57) **Zusammenfassung**

Bei dem erfindungsgemässe Last-Management-System für die Steuerung und Lastregelung elektrischer Verbraucher (V11, V12,..., V21, V22,..., Vnm), welche von einem Energieversorgungsunternehmen (EVU) über ein Stromversorgungsnetz versorgt werden, umfasst einen Last-Manager (LM), der über eine Steuersystemeinheit (SE) mit einer Anzahl Lastschaltgeräten (LS1, LS2,...,LSn) und nachgeschalteten Verbrauchern (V11, V12,..., V21, V22,..., Vnm) verbunden ist. Der Last-Manager (LM) weist sowohl eine erste Zeitzeileneinheit (ZEa) zum Schalten aller Verbraucher (V11, V12,..., V21, V22,..., Vnm) als auch eine erste Profileinheit (PEa) für die Zuordnung aller Verbraucher (V11, V12,..., V21, V22,..., Vnm) zu Profilgruppen (PGa) auf, wobei jedes nachgeschaltete Lastschaltgerät (LS1, LS2,...,LSn) eine jeweilige zweite Zeitzeileneinheit (ZEb) und eine zweite Profileinheit (PEb) aufweist, wobei letztere mindestens eine Teilmenge (PGb, PUb) der Profilgruppen (PGa) und der Profiluntergruppen (PUa) des Last-Managers (LM) umfasst und wobei mindestens diejenige Teilmenge (ZEb) aller Zeitzeilen (ZEa) des Last-Managers (LM) in dem jeweiligen Lastschaltgerät (LS1, LS2,...,LSn) vorhanden ist, welche Zeitzeilen (ZZb) zu der entsprechenden Teilmenge (PGb) der Profilgruppen (PGa) gehören. Innerhalb einer jeden Profilgruppe (PGa, PGb) sind sämtliche Verbraucher (V11, V12,..., V21, V22,..., Vnm) eines gleichen Verbrauchertyps (V1, V2,...,Vn) zusammenfassbar, wobei die Verbraucher (V11, V12,..., V21, V22,..., Vnm) gleichen Verbrauchertyps (V1, V2,...,Vn) innerhalb einer jeden Profilgruppe (PGa, PGb) in eine Anzahl Profiluntergruppen (PU1, PU2,..., PUn) einteilbar sind und für die Profiluntergruppen (PU1, PU2,..., PUn) jeweils entsprechend zugeordnete Zeitzeilen eines jeweiligen Lastschaltgeräts (LS1, LS2,...,LSn) aktivierbar oder deaktivierbar sind.

## Beschreibung

### FELD DER ERFINDUNG

Die vorliegende Erfindung bezieht sich auf das Gebiet Energietechnik; sie betrifft ein Last-Management-System für elektrische Verbraucher nach dem Oberbegriff des Anspruchs 1 und ein Last-Management-Verfahren für elektrische Verbraucher nach dem Oberbegriff des Anspruchs 7.

### HINTERGRUND DER ERFINDUNG

Stromversorgungsnetze sind hinlänglich bekannt; mit ihnen wird eine grosse Vielfalt elektrischer Verbraucher mit Energie versorgt. In solchen Stromversorgungsnetze stellen Kraftwerke mit Generatoren grosse Mengen elektrischer Energie bereit. Diese elektrische Energie wird mittels Hochspannungsleitungen zu Verbrauchsgebieten transportiert. Die Hochspannungsleitungen sind an Unterstationen miteinander verbunden, von wo aus die Hochspannung auf Mittelspannungsebene und Niederspannungsebene herunter transformiert wird.

Elektrische Verbraucher werden typischerweise auf Mittelspannungsebene und Niederspannungsebene versorgt, wobei Industrieverbraucher unmittelbar auf Mittelspannungsebene angeschlossen sind und Endverbraucher, wie Haushalte, Geschäfte und Bürokomplexe über eine Unterstation mit Verteilertransformator versorgt werden. Ein einzelner Verteiltransformator bedient somit eine sehr grosse Anzahl elektrischer Verbraucher mit Energie.

Da die Stromversorgungsnetze in den letzten Jahrzehnten stark ausgebaut wurden, mussten die bereitstellenden Kraftwerke entsprechend progressiv konstruiert werden. Grosse Kraftwerkseinheiten stellen heute üblicherweise 600 MW bis 900 MW bereit, wobei hunderte von Verbrauchern somit von einer einzigen Kraftwerkseinheit mit Energie versorgt werden. Grosse Kraftwerkseinheiten bieten den Vorteil eines besseren Wirkungsgrads gegenüber kleineren Einheiten, hingegen können bei Ausfall einer einzigen Einheit gleich ganze Stadtteile -ja sogar Landesteile- betroffen sein. Nicht zuletzt aus diesem Grund sind permanent genügend Kraftwerksanlagen, das heisst, über den jeweils aktuellen Verbrauch hinaus- in Betrieb, um die Stromversorgungsnetze auch im Falle eines Ausfalls einer oder mehrerer Kraftwerksanlagen zu stützen oder auftretende Lastspitzen abzufangen.

Da der elektrische Gesamtverbrauch über die Stromversorgungsnetze in Abhängigkeit der Tageszeit, des Wochentags, der Monatswoche und des Kalendermonats variiert, muss die verfügbare elektrische Energie, die jederzeit bereitzustehen hat, dynamisch geregelt werden, um sicherzustellen, dass genügend Energie für die erwartete Last zu einer bestimmten Zeit verfügbar ist. Erfahrungsgemäss werden Spitzenverbrauche an den heissesten Sommertagen und den kältesten Wintertage erreicht und der werktägliche Verbrauch ist höher als derjenige an Wochenenden. Das bedeutet, dass mit dem immer noch stetigen Wachstum auf der Verbrauchseite auch auf Seiten der Stromversorgungsnetze und der Kraftwerksanlagen weiter "aufgerüstet" werden muss. Demgegenüber stehen heute aber auch ein gewachsenes Umweltbewusstsein in Bezug auf den Verbrauch im Allgemeinen und nichts zuletzt hinsichtlich der Kraftwerkstechnologie und den damit verbundenen Kosten für den Bau, Unterhalt, die verwendete Energie-Ressource oder die Endlagerung von Brennstäben beispielsweise.

Um die installierten Stromversorgungsnetze vor Zusammenbrüchen bzw. Totalausfällen in Spitzenverbrauchsmomenten zu schützen ist es von Bedeutung, die derzeit verfügbare, installierte Kapazität möglichst optimal zu nutzen, das heisst, den Spitzenbedarf gezielt zu reduzieren, wobei Verbraucher gemäss ihren Möglichkeiten durch ein strategisches Last-Management aus bzw. eingeschalten werden sollen. Auf diese Art können die Spitzen der Energienutzung gebrochen werden und der Betrieb geeigneter Lasten auf Zeiten niedrigerer Auslastung verschoben werden. Beispiele für derartig geeignete, im Rahmen eines Last-Managements schaltbare Lasten sind Warmwasserboiler, elektrische Heizungen bzw. Klimaanlagen, Wärmepumpen, Poolpumpen, Stromtankstellen für Fahrzeuge oder industrielle Kühlgeräte. Darüber hinaus sind weitere Regelungen bzw. Steuerungen von Lasten unter einem Last-Management denkbar, nämlich das Schalten von Strassenbeleuchtungen, Sturmwarnungen und statische oder dynamische Tarifmodelle.

Berücksichtigt man die oben genannten, im Rahmen eines Last-Managements schaltbaren Verbraucher so können sich für ein typisches, versorgendes Unterwerk mit einer maximalen Leistung von 320MVA elektrisch, die folgenden zu- bzw. abschaltbaren Leistungswerte ergeben: im Wintermonat Dezember 38MVA und im Sommermonat Juli 25MVA, was etwa 12% bzw. 8% der gesamten verfügbaren Spitzenlast ausmacht.

Hier liegt das grosse Potenzial des Last-Managements, wenn schaltbare Verbraucher in Zeiten des Spitzenverbrauchs abgeschaltet werden und zu Zeiten niedrigen Verbrauchs wieder eingeschalten werden. Selbstverständlich sind solche Abschaltungen und Zuschaltungen mit Endverbrauchern vertraglich zu regeln. Hier besteht die Möglichkeit mittels günstigeren Tarifen zu Zeiten niedrigerer Netzauslastung lenkend auf die Endverbraucher einzuwirken.

Es gibt zahlreiche Beispiele in der Patentliteratur, die sich mit Last-Management beschäftigen; grundsätzlich unterliegen sie dem gleichen Ziel, nämlich zu Spitzenverbrauchszeiten Lastabschaltungen (load shedding) schaltbarer Verbraucher vorzunehmen, damit die Stromversorgungsnetze und auch die Energie liefernden Kraftwerke nicht überlastet werden und damit die Gefahren eines Teil- oder Totalausfalls zu minimieren. Um Lastabschaltungen vornehmen zu können, bedarf es der Kommunikation zwischen Energieversorgungsunternehmen auf der einen Seite und Verbrauchern auf der anderen. Ein Hauptproblem bei dieser Kommunikation ist in der Geschwindigkeit der Datenübertragung zu sehen. Eine Vielzahl bekannter Problemlösungen sieht vor, dass der Verbrauch einer jeden Last an die Energieversorgungsunternehmen identifizierbar übermittelt wird und anschliessend entsprechende Lastabschaltungen schaltbarer Verbraucher erfolgt. Es müssen demnach aktuelle Verbrauchswerte einer sehr grossen Anzahl Verbrauchern über ein entsprechendes Kommunikationsnetz zum Energieversorger übertragen werden, anschliessend eine Auswertung für ein geeignetes Last-Management getroffen werden und mittels dem gleichen oder einem weiteren Kommunikationsnetz entsprechende Abschaltbefehle bzw. Zuschaltbefehle ausgesendet werden.

In der US 6624532 B1 ist Last-Management-System beschrieben, dass eine Last-Management-Betriebsleitstelle, mindestens ein Energie-Management-Abschaltsystem, eine Vielzahl von Stromleitungsknoten und ebenfalls eine Vielzahl von Last-Management-Geräten umfasst, wobei jedem Last-Management-Gerät eine jeweilige zu steuernde Last zugeordnet ist. Die Last-Management-Betriebsleitstelle kommuniziert über das Energie-Management-Abschaltsystem und die Stromleitungsknoten mit den Last-Management-Geräten zwecks Abschaltung der jeweiligen, den Last-Management-Geräten zugeordneter Lasten. Hierfür adressiert die Last-Management-Betriebsleistelle eine Teilmenge der Vielzahl von eindeutig identifizierbaren Last-Management-Geräten, um Lasten ab- oder zuzuschalten.

Als wesentlich ist in der genannten Druckschrift dargelegt, dass die Last-Management-Betriebsleistelle die aktuellen Verbrauchswerte bei der Vielzahl der Last-Management-Geräten abfragt, diese Verbrauchswerte auswertet und anschliessend einzelne Last-Management-Geräte oder Gruppen von Last-Management-Geräte zur Lastabschaltung zwingt.

Da jedes Last-Management-Gerät eindeutig identifizierbar ist, weist die hier vorliegende Technologie einen grösstmöglichen Individualisierungsgrad auf, da jede einzelne, schaltbare Last im Stromversorgungsnetz über das übergeordnete, identifizierbare Last-Management-Gerät individuell ansteuerbar ist. Dieser hohe Individualisierungsgrad zieht zwangsläufig einen entsprechend grossen Installationsaufwand mit sich. Ferner ist zu berücksichtigen, dass für das hier gezeigte Last-Management-System permanent die Energieverbrauchswerte der einzelnen Lasten über die Last-Management-Geräte abgefragt und übermittelt werden müssen; dies stellt konsequenterweise sehr hohe Ansprüche an ein zum Einsatz gelangendes, bidirektionales Kommunikationssystem und in gleicher Weise an ein Datenverarbeitungssystem; schliesslich kann ein Last-Management nur dann wirksam sein, wenn es schnell genug auf dynamische Änderungen im Stromversorgungsnetz reagieren kann.

Erste Erfahrungen mit konservativen Last-Management-Systemen haben aber gezeigt, dass eben gerade wegen des an sich vorteilhaften, grösstmöglichen Individualisierungsgrads - jede einzelne Last hat ihr eigenes, zugeordnetes Last-Management-Gerät- eine hohe Kostenintensität zu verzeichnen ist und zudem die notwendige, bidirektionale Kommunikation und Auswertung grosser Datenmengen eine unerwünschte Trägheit zur Folge haben können.

Das in der US 6624532 B1 verwendete Kommunikationssystem gehört zu den Trägerfrequenzsystemen, namentlich wird hier das bekannte Power-Line-Carrier-System eingesetzt, kurz, PLC-System; bei diesem Kommunikationssystem stehen sich die bidirektionale, hohe Übertragungsgeschwindigkeit und die beispielsweise in Bezug auf Rundsteuerung vergleichsweise geringe Übertragungssicherheit einander gegenüber.

Bekannt sind die konventionelle Rundsteuerung und die Trägerfrequenztechnologie für ihr im Wesentlichen "fixes" Last-Management. Verbraucher werden über Empfänger zu vordefinierten Zeiten mittels in den Empfängern abgelegten Zeitzeilen zu- bzw. abgeschaltet. Selbstverständlich ist ebenfalls ein gewisses Mass an "dynamischem" Last-Management möglich; hier wirkt allerdings einschränkend, dass gerätespezifische Freigabezeiten oder Sperrzeiten für steuerbare elektrische Verbraucher in den Stromversorgungsnetzen nicht genügend individuell ausgebildet sind. Es wird nämlich beispielsweise mittels eines Empfängers eine Verbrauchergruppe eines Strassenzuges, mehrerer Strassenzüge oder anderer Besiedlungsstrukturen entweder zu- oder abgeschaltet. So können zum Lastausgleich bei auftretenden Lastspitzen zum Beispiel alle Warmwasserboiler abgeschaltet werden, die dann bei Auftreten eines Lasttals in der Lastganglinie eines Versorgungsunternehmens während des Tagesverlaufs wieder zugeschaltet werden können. Allerdings ist hier der Individualisierungsgrads gegenüber dem Last-Management-System aus der oben erörterten US 6624532 B1 vergleichsweise gering, was die Einsatzmöglichkeiten dieses "dynamischen" Last-Managements begrenzt.

Vor dem Hintergrund des sich öffnenden Energiemarkts sind kundenspezifische Bedürfnisse und Möglichkeiten ausserordentlich vielfältig, wobei dem gegenüber die maximal nutzbare, installierte Kraftwerksleistung steht.

### DARSTELLUNG DER ERFINDUNG

Es ist daher Aufgabe der Erfindung, ein Last-Management-System und ein Last-Management-Verfahren bereitzustellen, das einerseits schnell auf dynamische Laständerungen, insbesondere bei auftretenden Lastspitzen, reagieren kann, und andererseits einfach und wirtschaftlich mit einem hohen Individualisierungsgrad für eine Vielzahl von Verbrauchern unterschiedlichen Verbrauchertyps in bestehende Stromversorgungsnetze integrierbar ist. Die der Erfindung zugrunde liegende Aufgabe für das Last-Management-System wird durch die Gesamtheit der Merkmale des Anspruchs 1 gelöst. Weitere Ausführungsformen sind Gegenstand der abhängigen Ansprüche 2 bis 6.

Das erfindungsgemässe Last-Management-System für die Steuerung und die Lastregelung elektrischer Verbraucher, welche von einem Energieversorgungsunternehmen (EVU) über ein Stromversorgungsnetz versorgt werden, umfasst einen Last-Manager, der über eine Steuersystemeinheit mit einer Anzahl Lastschaltgeräten und nachgeschalteten Verbrauchern verbunden ist. Der Last-Manager weist sowohl eine erste Zeitzeileneinheit zum Schalten aller Verbraucher als auch eine erste Profileinheit für die Zuordnung aller Verbraucher zu Profilgruppen auf, wobei jedes nachgeschaltete Lastschaltgerät eine jeweilige zweite Zeitzeileneinheit und eine zweite Profileinheit aufweist, wobei letztere mindestens eine Teilmenge der Profilgruppen und der Profiluntergruppen des Last-Managers umfasst und wobei mindestens diejenige Teilmenge aller Zeitzeilen des Last-Managers in dem jeweiligen Lastschaltgerät vorhanden ist, die zu der entsprechenden Teilmenge der Profilgruppen gehören. Innerhalb einer jeden Profilgruppe sind sämtliche Verbraucher eines gleichen Verbrauchertyps zusammenfassbar, wobei die Verbraucher gleichen Verbrauchertyps innerhalb einer jeden Profilgruppe in eine Anzahl Profiluntergruppen einteilbar sind und für die Profiluntergruppen jeweils entsprechend zugeordnete Zeitzeilen eines jeweiligen Lastschaltgeräts aktivierbar oder deaktivierbar sind.

### Definitionen verwendeter Begriffe

- • Zeitzeilen:: programmierbare Befehlszeilen mit und ohne zeitliche Zuordnung; hier werden unter Zeitzeilen alle Befehlszeilen verstanden, die für das Schalten von Verbrauchern benötigt werden sollen, wie zum Beispiel Zeitzeilen mit Tageszeitzuordnung und/oder Datumszuordnung, die Verbraucher schalten oder "Zeitzeilen" die als Hilfsbefehlszeilen keine zeitliche Zuordnung haben und ausschliesslich über Direktkommandos das Zu- bzw. Abschalten von Verbrauchern ermöglichen;
- • Verbraucher:: weisen gerätespezifische und kundenspezifische Freigabezeiten oder Sperrzeiten auf, das heisst, dass Verbraucher mittels einer Fernsteueranlage (Steuersystemeinheit) entsprechend zugeschaltet oder abgeschaltet werden können;
- • Verbrauchertypen:: Verbraucher sind nach der Art ihres Verbrauchs einteilbar; beispielsweise sind die folgenden Verbrauchertypen bekannt, namentlich Verbraucher im Bereich Heizen (Vollspeicherheizungen, Speicherheizungen mit Tagnachladung, Teilspeicherheizungen mit Direktheizanteil, Wärmepumpenheizungen), Kühlen (Klimageräte, Klimaanlagen), Haushalt (Warmwasserboiler, Durchlauferhitzer, Spülmaschinen, Waschmaschinen, Wäschetrockner, Industrie (Industrieöfen, Industriekühlanlagen), Landwirtschaft (Pumpenanlagen, Schöpfgeräte, Beregnungsanlagen, Futterdämpfer).
- • Profilgruppen:: Verbraucher werden in Profilgruppen eingeteilt, wobei eine Anzahl spezifische Zeitzeilen solchen Profilgruppen zugeordnet werden, beispielsweise in die Profilgruppe Heizen oder die Profilgruppe Boiler;
- • Profiluntergruppen: dienen dazu, innerhalb von Profilgruppen die Verbraucher gemäss ihren Schaltmöglichkeiten bzw. Schaltbedingungen zu unterscheiden; so ist beispielsweise in der Profilgruppe "Boiler" denkbar, dass die eine Profiluntergruppe "Boiler A" ausschliesslich nachts zwischen 01:00 Uhr und 05:00 Uhr mittels einem Befehl aus den Zeitzeilen zu- bzw. abgeschaltet werden können, wohingegen eine andere Profiluntergruppe "Boiler B" ausschliesslich über eine Hilfsbefehlzeile tageszeitunabhängig und Last regelnd zu bzw. abgeschaltet werden kann;
- • Steuersystemeinheit:: umfasst eine Fernsteueranlage, die beispielsweise drahtgebunden oder per Funk Rundsteuersignale oder Trägerfrequenzsignale zum Schalten von Verbrauchern aussendet;
- • Direktkommando:: wird vom Last-Management-System zum direkten Schalten von Verbrauchern benutzt.

Das neue Last-Management-System zeichnet sich dadurch aus, dass es besonders schnell ist; quasi zu jedem Zeitpunkt können entsprechend schaltbare bzw. steuerbare Verbraucher von übergeordneten Lastschaltgeräten ab- oder zugeschaltet werden. Hierfür ist lediglich eine schnelle Einwegkommunikation in Richtung Verbraucher nötig, da die aktuellen Schaltzustände (zu- oder abgeschaltet) dem Last-Manager ohne jede vorgängige Abfrage von Verbrauchswerten bekannt ist. Demzufolge ist bei auftretenden Lastspitzen die Möglichkeit gegeben, quasi unmittelbar auf schaltbare Verbraucher einwirken zu können, um unerwünschten Lastspitzen mit Blick auf einen möglichst sicheren und darüber hinaus wirtschaftlichen Betrieb der Stromversorgungsnetze und der Energieversorger entgegenwirken zu können.

Umgekehrt sind Verbraucher bei auftretenden Lasttälern gemäss ihrer Profiluntergruppenzugehörigkeit ebenso schnell wieder zuschaltbar, womit auch in diesen Zeiten der Betrieb von Kraftwerken mit jeweils grösstmöglichem Wirkungsgrad durchgeführt werden kann. Ferner zeichnet sich das neue Last-Management-System durch einen hohen Individualisierungsgrad aus, da alle schaltbaren Verbraucher in Profiluntergruppen mit entsprechenden Zeitzeilen zum zu- und abschalten einteilbar sind, wobei diese Profiluntergruppenzuweisung auf einfache und schnelle Weise mittels der Steuersystemeinheit geändert werden kann. Somit können sich ändernde Kundenbedürfnisse und Verbraucheränderungen schnell und einfach ungesetzt werden. Dabei ist des Weiteren von Vorteil, dass für das neue Last-Management-System mit eine gegenüber dem Stand der Technik kleinen Installationsaufwand aufkommt, da alle schaltbaren Verbraucher in den entsprechenden Profiluntergruppen angesteuert werden.

Das hier vorgestellte Last-Management-System bedient sich der Rundsteuertechnologie und/oder der Trägerfrequenztechnologie als Steuersystem, also Technologien, die heute bereits breite Anwendung finden und mittels des neuen Last-Management-Systems mit erweiterten, bisher nicht bekannte Funktionen aufgewertet werden.

Die der Erfindung zugrunde liegende Aufgabe für das Last-Management-Verfahren wird durch die Gesamtheit der Merkmale des Anspruchs 7 gelöst. Weitere Ausführungsformen sind Gegenstand der abhängigen Ansprüche 8 bis 12.

Das erfindungsgemässe Last-Management-Verfahren zeichnet sich dadurch aus, dass ein Last-Manager in Abhängigkeit von einer ersten Zeitzeileneinheit und einer ersten Profileinheit ein Direktkommando zu Lastschaltgeräten und damit zu den entsprechenden Verbrauchern zwecks Zuschalten oder Abschalten sendet. Hierdurch kann schnell auf in Profiluntergruppen zusammengefasste Verbraucher gleichen Verbrauchertyps eingewirkt werden, und das bei im Vergleich zum Stand der Technik kleinem Installationsaufwand.

Da weitere Vorteile des neuen Last-Management-Verfahrens bereits mit Blick auf das Last-Management-System erörtert wurden, wird auf eine Wiederholung an dieser Stelle verzichtet.

### KURZBESCHREIBUNG DER FIGUREN

Die Erfindung soll nachfolgend anhand von Ausführungsbeispielen im Zusammenhang mit der Zeichnung näher erläutert werden.

Es zeigen:
- Fig. 1: ein Blockschaltbild des neuen Last-Management-Systems;
- Fig. 2: eine erste Ausführungsform des erfindungsgemässen Last-ManagementSystems anhand eines Installationsbeispiel für Warmwasserboiler; und
- Fig. 3: eine weitere Ausführungsform des Last-Management-Systems anhand des Installationsbeispiels für Strassenbeleuchtungen.

### DETAILLIERTE BESCHREIBUNG BEVORZUGTER AUSFÜHRUNGSFORMEN

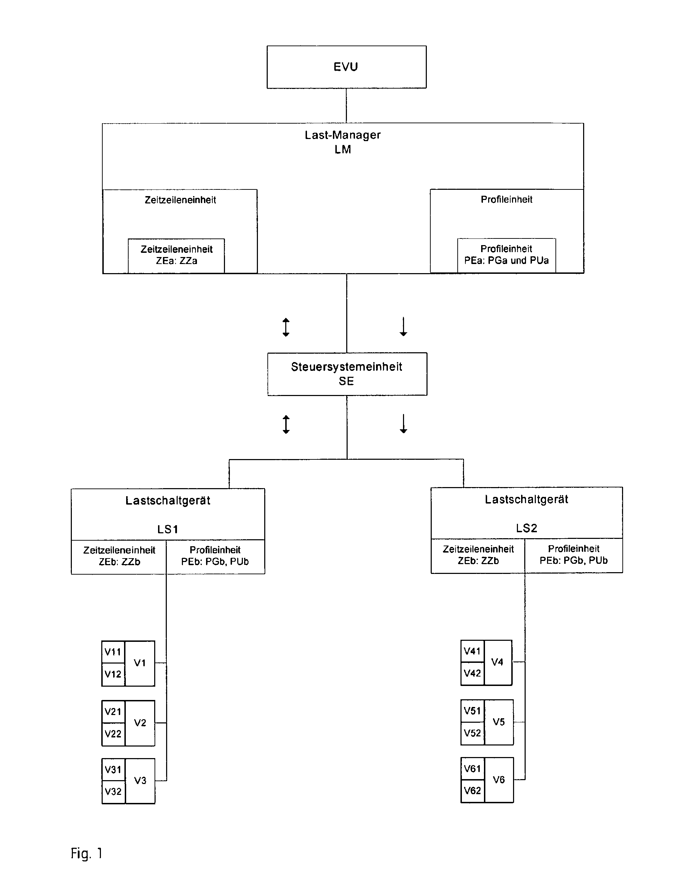

Fig. 1 zeigt anhand eines Blockschaltbilds ein neues Last-Management-System für die Lastregelung elektrischer Verbraucher V11, V12,..., V21, V22,..., Vnm, welche von einem Energieversorgungsunternehmen EVU über ein Stromversorgungsnetz versorgt werden, wobei ein Last-Manager LM über eine Steuersystemeinheit SE mit einer Anzahl Lastschaltgeräten LS1, LS2,..., LSn und nachgeschalteten Verbrauchern V11, V12,..., V21, V22,..., Vnm verbunden ist. Der Last-Manager LM umfasst eine erste Zeitzeileneinheit ZEa mit Zeitzeilen ZZa zum Schalten aller Verbraucher V11, V12,..., V21, V22,..., Vnm; darüber hinaus umfasst der Last-Manager LM eine erste Profileinheit PEa für eine Zuordnung aller Verbraucher V11, V12,..., V21, V22,..., Vnm zu Profilgruppen PGa, wobei der Last-Manager LM alle im Stromversorgungsnetz einsetzbaren Zeitzeilen ZZa und alle denkbaren Profilgruppen PGa aufweist. Selbstverständlich ist der Last-Manager LM in der Lage, bei sich ändernden Verbraucherbedingungen, neue Zeitzeilen ZZa und auch neue Profilgruppen PGa zu erstellen. Solche Änderungen der Verbraucherbedingungen können beispielsweise auf neuartige Verbraucher im Stromversorgungsnetz beruhen oder sich ändernde Möglichkeiten der Schaltbarkeit von Verbrauchern; so ist es denkbar, dass gewisse Verbraucher, die bis anhin nicht für ein Last-Management zur Verfügung standen, neu ebenfalls schaltbar sein können oder umgekehrt.

Ferner weist der Last-Manager LM in der ersten Profileinheit PEa eine vollständig Anzahl von Profiluntergruppen PU1, PU2,..., PUn auf, wobei in diesen Profiluntergruppen PU1, PU2,..., PUn jeweils Verbraucher V11, V12,..., V21, V22,..., Vnm eines gleichen Verbrauchertyps V1, V2,..., Vn zusammenfassbar sind. Beispielhaft werden an dieser Stelle die folgenden Verbrauchertypen wie folgt genannt: Verbraucher im Bereich Heizen (Vollspeicherheizungen, Speicherheizungen mit Tagnachladung, Teilspeicherheizungen mit Direktheizanteil, Wärmepumpenheizungen), Kühlen (Klimageräte, Klimaanlagen), Haushalt (Warmwasserboiler, Durchlauferhitzer, Spülmaschinen, Waschmaschinen, Wäschetrockner, Industrie (Industrieöfen, Industriekühlanlagen), Landwirtschaft (Pumpenanlagen, Schöpfgeräte, Beregnungsanlagen, Futterdämpfer), wobei im Sinn der Erfindung, diese Aufzählung keinesfalls abschliessend zu betrachten ist.

Jedes Lastschaltgerät LS1, LS2,..., LSn umfasst eine zweite Zeitzeileneinheit ZEb und eine zweite Profileinheit PEb mit mindestens einer Teilmenge PGb der Profilgruppen PGa und der Profiluntergruppen PUa des Last-Managers LM, wobei mindestens diejenige Teilmenge ZZb aller Zeitzeilen ZZa des Lastmanagers LM in dem jeweiligen Lastschaltgerät LS1, LS2,..., LSn vorhanden ist, welche Zeitzeilen ZZb zu der entsprechenden Teilmenge PGb der Profilgruppen PGa des Last-Managers LM gehören.

Für die Verbraucher V11, V12,..., V21, V22,..., Vnm gleichen Verbrauchertyps V1, V2,..., Vn innerhalb einer jeden Profilgruppe PGa, PGb bzw. innerhalb einer jeden Profiluntergruppen PU1, PU2,..., PUn sind jeweils entsprechend zugeordnete Zeitzeilen ZZb eines jeweiligen Lastschaltgeräts LS1, LS2,..., LSn aktivierbar oder deaktivierbar, wobei die Verbraucher V11, V12,..., V21, V22,..., Vnm jeweils gemäss ihren Schaltbedingungen, die für eine jeweilige Profiluntergruppe PU1, PU2,..., PUn gilt, zu- bzw. abschaltbar sind.

Da dem Last-Manager LM der Schaltzustand, namentlich zu- oder abgeschaltet, aller Verbraucher V11, V12,..., V21, V22,..., Vnm bekannt ist, kann dieser Last-Manager LM die Verbraucher V11, V12,..., V21, V22,..., Vnm darüber hinaus mittels eines Direktkommandos DK über die Steuersystemeinheit SE und die jeweiligen Lastschaltgeräte LS1, LS2,..., LSn zu- bzw. abschalten. Völlig frei von jeder aktuellen Verbrauchsanfrage bei den Verbrauchern V11, V12,..., V21, V22,..., Vnm schaltet der Last-Manager LM entsprechend ihrer jeweiligen Schaltbarkeit diese Verbraucher V11, V12,..., V21, V22,..., Vnm zu- oder ab; dabei folgt der Last-Manager LM ebenfalls den übergeordneten Rahmenbedingungen der Energieversorger EVU und der Auslastung des Stromversorgungsnetzes durch eine beispielsweise Anbindung an das EVU- Netzleitsystem. Da es sich vor dem Hintergrund bekannter Schaltzustände aller Verbraucher V11, V12,..., V21, V22,..., Vnm um unmittelbare Schalthandlungen handelt, kann das Last-Management-System effizient und innerhalb von Sekunden auf drohende Lastspitzen oder auftretende Lasttäler reagieren, um die Lastganglinie der Energieversorger nach besten Möglichkeiten "abzuflachen", das heisst, Lastspitzen zu brechen und Lasttäler aufzufüllen.

Der Last-Manager LM ist in der Lage, über die Steuersystemeinheit (SE) mindestens die Teilmenge ZZb aller Zeitzeilen ZZa, die Teilmenge PGb aller Profilgruppen PGa und die Profiluntergruppen PU1, PU2,..., PUn an die jeweiligen zweiten Zeitzeileneinheiten ZEb bzw. die jeweiligen zweiten Profileinheiten PEb der entsprechenden Lastschaltgeräte LS1, LS2,..., LSn zu übertragen. Hierfür ist die Steuersystemeinheit SE als Rundsteuersystemeinheit und/oder als Trägerfrequenzsystemeinheit ausgebildet und die Lastschaltgeräte LS1, LS2,..., LSn als Rundsteuerempfänger bzw. Trägerfrequenzempfänger; im Sinne der Erfindung ist sowohl eine unidirektionale als auch eine bidirektionale Kommunikation einsetzbar und die Steuersystemeinheit SE kann ferner drahtgebunden mit den Lastschaltgeräten LS1, LS2,..., LSn kommunizieren und/oder per Funkverbindung.

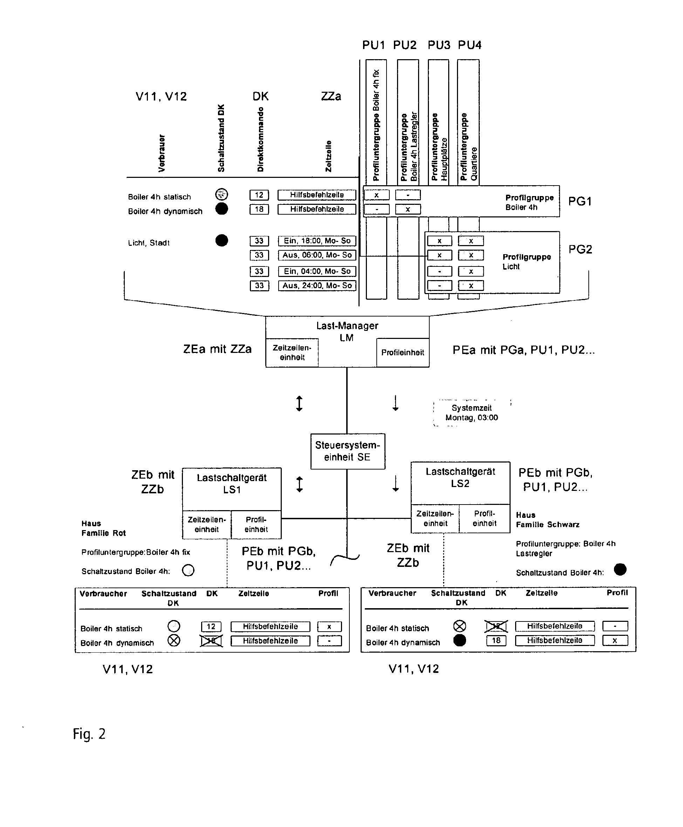

In Fig. 2 ist ein Ausführungsbeispiel anhand der Verbraucher "Boiler 4h statisch", V11, und "Boiler 4h dynamisch", V12, gezeigt; beide Verbraucher V11, V12 gehören zu der Profilgruppe PG1, sind aber unterschiedlichen Profiluntergruppen PU1 bzw. PU2 zugeordnet, namentlich "Boiler 4h fix" bzw. "Boiler 4h Lastregler". Zu dieser Profilgruppe PG1 gehören zwei Zeitzeilen (Hilfsbefehlszeilen) ZZa (bzw. ZZb als Teilmenge von ZZa), mit denen diese Verbraucher V11, V12 über den Last-Manager LM, die Steuersystemeinheit SE und die Lastschaltgeräte LS1 bzw. LS2 zu- bzw. abgeschaltet werden können. Hierfür sind die Zeitzeilen (Hilfsbefehlszeilen) ZZa (bzw. ZZb als Teilmenge von ZZa) als Hilfsbefehlszeilen - verbunden mit Direktkommandos 12 und 18- ausgebildet.

Über das Lastschaltgerät LS1 ist mittels Direktkommando "12" der "Boiler 4h statisch" zu vordefinierten Zeiten seitens des Last-Managers LM zu- bzw. abschaltbar. Die Schaltzeiten sind im Last-Manager LM vorgängig bestimmt und ändern sich nicht; das Zu- bzw. Abschalten des Verbrauchers V11, "Boiler 4h statisch" erfolgt somit unabhängig von der Lastganglinie der Energieversorgung. Verbraucher V11 trägt somit nicht zum dynamischen Last-Management bei, sondern lediglich zum statischen Last-Management.

Obwohl in diesem Ausführungsbeispiel lediglich ein einzelner Verbraucher V11 mittels Lastschaltgerät LS1 gesteuert wird, können im Stromversorgungsnetz tatsächlich sämtliche zur Profiluntergruppe PU1 gehörenden Verbraucher V11 gleichen Verbrauchertyps V1 gesamthaft geschaltet, und zwar über das Lastschaltgerät LS1; es zeigt sich, dass ein Lastschaltgerät LS1 ausreichend sein kann, um eine Vielzahl gleichgearteter Verbraucher im Stromversorgungsnetz zu bedienen. Somit kann der Installationsaufwand möglichst klein gehalten werden und die Einflussnahme auf die Lastganglinie mittels eines "Broadcast-Signals", Direktkommando "12", äusserst schnell erfolgen.

Verbraucher V12 "Boiler 4h dynamisch" gehört zur Profiluntergruppe PU2 "Boiler 4h Lastregler" und zur übergeordneten Profilgruppe PG1 "Boiler 4h". Verbraucher 12 ist somit der flexiblen Last-Regelung über den Last-Manager LM zugänglich. In Abhängigkeit der Lastganglinie der Energieversorgung wird der Verbraucher V12 zu- bzw. abgeschaltet, das heisst, bei auftretenden Lastspitzen schaltet der Last-Manager LM Verbraucher 12 ab und bei auftretenden Lasttälern wieder zu, bis innerhalb eines Tagesverlaufs die vier Stunden (4h) Ladezeit bzw. Aufheizzeit erreicht ist. Auch hier gilt wieder, dass mit dem Lastschaltgerät LS2 nicht nur der eine Verbraucher V12 bedient werden kann, sondern sämtliche Verbraucher 12 "Boiler 4h dynamisch".

Ferner ist denkbar, lediglich ein Lastschaltgeräte LS1 oder LS2 für die Last-Regelung aller zur Profilgruppe PG1 "Boiler 4h" zu verwenden, da ein Lastschaltgerät LS1 oder LS2 in der Lage ist, mehrere -hier nicht gezeigte- Schalteinheiten zu umfassen und somit mehrere Profiluntergruppen PU1, PU2,...PUn zu bedienen.

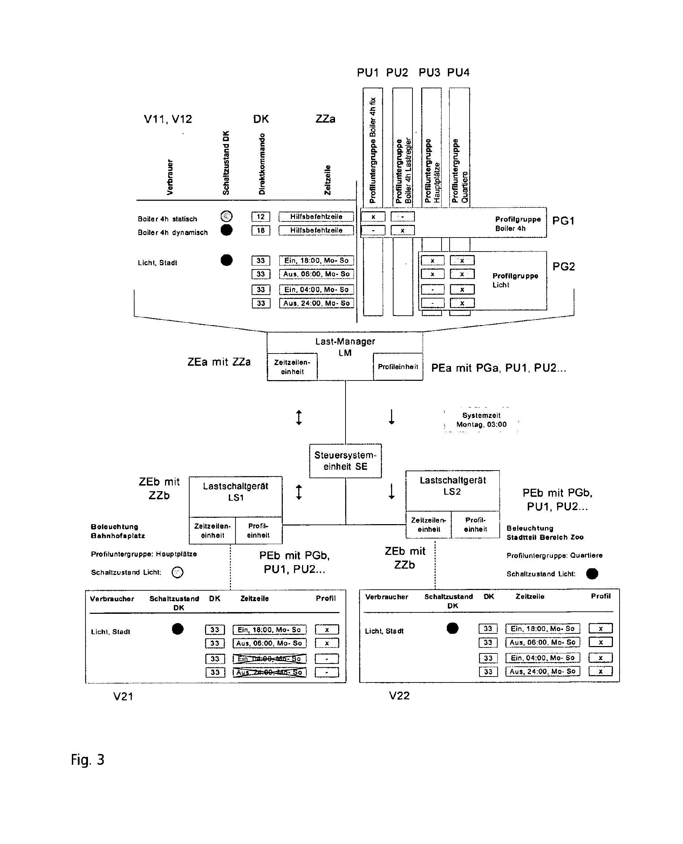

In Fig. 3 ist ein weiteres Ausführungsbeispiel anhand des Verbrauchertyps V2 "Strassenbeleuchtung" mit den Verbrauchern V21 "Beleuchtung Hauptplätze" und V22 "Beleuchtung Quartiere". Hier weist die Profilgruppe PG2 "echte" Zeitzeilen, "Ein, 18:00, Mo-So", "Aus, 06:00, Mo-So, "Ein, 04:00, Mo-So" und "Aus, 24:00, Mo-So", wobei die ersten beiden Zeitzeilen zur Profiluntergruppe PU3 gehören und die beiden letzteren zur Profiluntergruppe PU4; somit sind innerhalb der Profilgruppe PG2 "Licht" unterschiedliche - autarke und damit fixe- Beleuchtungsschaltzeiten möglich. Zudem ist der Profilgruppe PG2 aber ebenfalls ein Direktkommando "33" zugeordnet, über welches der Last-Manager LM unmittelbare Schaltbefehle den Lastschaltgeräten LS1 und LS2 übermitteln kann und die Beleuchtung den Zeitzeilen übergeordnet regeln kann, und zwar in Abhängigkeit der Lastganglinie der Energieversorgung.

Auch in diesem Ausführungsbeispiel ist jedem Lastschaltgerät LS1, LS2 lediglich ein Verbraucher zugeordnet; selbstverständlich gilt hier ebenfalls, dass jedem einzelnen Lastschaltgerät eine Mehrzahl schaltbarer Verbraucher in unterschiedlichen Profiluntergruppen zugeordnet werden können, der jedes Lastschaltgerät nicht auf ein einzelnes -hier nicht gezeigtes Schaltelement- beschränkt ist. Ausserdem sind in den Fig. 2 und 3 lediglich Ausführungsformen der Erfindung für die Verbrauchergruppen "Boiler" bzw. "Licht" beispielhaft gezeigt; im Sinne der Erfindung sind aber alle denkbaren, einem statischen und/oder dynamischen Last-Management zugänglichen Verbraucher in das neue Last-Management-System bzw. dem Last-Management-Verfahren einbindbar.

Ferner können bei sich ändernden Randbedingen für das Stromversorgungsnetz oder bei vertraglichen Änderungen nun Verbraucher gleichen Verbrauchertyps innerhalb einer Profilgruppe einer anderen Profiluntergruppe zugeordnet werden und damit geschaltet werden.

## Patentansprüche

1. Last-Management-System für die Steuerung und Lastregelung elektrischer Verbraucher (V11, V12,..., V21, V22,..., Vnm), welche von einem Energieversorgungsunternehmen (EVU) über ein Stromversorgungsnetz versorgt werden, wobei ein Last-Manager (LM) über eine Steuersystemeinheit (SE) mit einer Anzahl Lastschaltgeräten (LS1, LS2,..., LSn) und nachgeschalteten Verbrauchern (V11, V12,..., V21, V22,..., Vnm) verbunden ist, **dadurch gekennzeichnet,**
- **dass** der Last-Manager (LM) eine erste Zeitzeileneinheit (ZEa) mit Zeitzeilen (ZZa) zum Schalten aller Verbraucher (V11, V12,..., V21, V22,..., Vnm) und eine erste Profileinheit (PEa) für eine Zuordnung aller Verbraucher (V11, V12,..., V21, V22,..., Vnm) zu Profilgruppen (PGa) umfasst,
- **dass** jedes Lastschaltgerät (LS1, LS2,..., LSn) eine zweite Zeitzeileneinheit (ZEb) und eine zweite Profileinheit (PEb) mit mindestens einer Teilmenge (PGb, PUb) der Profilgruppen (PGa) und der Profiluntergruppen (PUa) des Last-Managers (LM) umfasst, wobei mindestens diejenige Teilmenge (ZZb) aller Zeitzeilen (ZZa) des Lastmanagers (LM) in dem jeweiligen Lastschaltgerät (LS1, LS2,..., LSn) vorhanden ist, welche Zeitzeilen (ZZb) zu der entsprechenden Teilmenge (PGb) der Profilgruppen (PGa) des Last-Managers (LM) gehören,
- **dass** innerhalb einer jeden Profilgruppe (PGa, PGb) sämtliche Verbraucher (V11, V12,..., V21, V22,..., Vnm) eines gleichen Verbrauchertyps (V1, V2,...,Vn) zusammenfassbar sind, wobei die Verbraucher (V11, V12,..., V21, V22,..., Vnm) gleichen Verbrauchertyps (V1, V2,..., Vn) innerhalb einer jeden Profilgruppe (PGa, PGb) in eine Anzahl Profiluntergruppen (PU1, PU2,..., PUn) einteilbar sind und für die Profiluntergruppen (PU1, PU2,..., PUn) jeweils entsprechend zugeordnete Zeitzeilen (ZZb) eines jeweiligen Lastschaltgeräts (LS1, LS2,..., LSn) aktivierbar oder deaktivierbar sind.

2. Last-Management-System gemäss Anspruch 1, **dadurch gekennzeichnet, dass** mit dem Last-Manager (LM) aufgrund eines bekannten Schaltzustands (zu- oder abgeschaltet) der Verbraucher (V11, V12,..., V21, V22,..., Vnm) gleichen Verbrauchertyps (V1, V2,..., Vn), diese Verbraucher (V11, V12,..., V21, V22,..., Vnm) mittels einem Direktkommando (DK) über die Steuersystemeinheit (SE) und die Lastschaltgeräte (LS1, LS2,..., LSn) zu- bzw. abschaltbar sind.

3. Last-Management-System nach Anspruch 1 oder 2, **dadurch gekennzeichnet, dass** die Zeitzeilen (ZZa) in der ersten Zeitzeileneinheit (ZEa) und die Profilgruppen (PGa) in der ersten Profileinheit (PEa) im Last-Manager (LM) durch diesen selbst aufgrund der Schaltmöglichkeiten der Verbraucher (V11, V12,..., V21, V22,..., Vnm) bestimmbar sind.

4. Last-Management-System nach einem der vorhergehenden Ansprüche, **dadurch gekennzeichnet, dass** mit dem Last-Manager (LM) über die Steuersystemeinheit (SE) mindestens die Teilmenge (ZZb) aller Zeitzeilen (ZZa), die Teilmenge (PGb) aller Profilgruppen (PGa) und die Profiluntergruppen (PU1, PU2,..., PUn) an die jeweiligen zweiten Zeitzeileneinheiten (ZEb) bzw. die jeweiligen zweiten Profileinheiten (PEb) der entsprechenden Lastschaltgeräte (LS1, LS2,..., LSn) übertragbar sind.

5. Last-Management-System nach einem der vorhergehenden Ansprüche, **dadurch gekennzeichnet, dass** die Steuersystemeinheit (SE) als Rundsteuersystemeinheit und/oder als Trägerfrequenzsystemeinheit ausgebildet ist und die Lastschaltgeräte (LS1, LS2,..., LSn) als Rundsteuerempfänger bzw. Trägerfrequenzempfänger.

6. Last-Management-System nach einem der vorhergehenden Ansprüche, **dadurch gekennzeichnet, dass** die Steuersystemeinheit (SE) drahtgebunden mit den Lastschaltgeräten (LS1, LS2,...LSn) verbunden ist und/oder per Funkverbindung.

7. Last-Management-Verfahren für die Steuerung oder Lastregelung elektrischer Verbraucher (V1, V2,..., Vn), welche von einem Energieversorgungsunternehmen (EVU) über ein Stromversorgungsnetz versorgt werden, wobei ein Last-Manager (LM) über eine Steuersystemeinheit (SE) mit einer Anzahl Lastschaltgeräten (LS1, LS2,...,LSn) und nachgeschalteten Verbrauchern (V11, V12,..., V21, V22,..., Vnm) verbunden ist, **dadurch gekennzeichnet,**
- **dass** der Last-Manager (LM) in Abhängigkeit von einer ersten Zeitzeileneinheit (ZEa) und einer ersten Profileinheit (PEa) ein Direktkommando (DK) zu den Lastschaltgeräten (LS1, LS2,..., LSn) und damit zu den entsprechenden Verbrauchern (V11, V12,..., V21, V22,..., Vnm) zwecks Zuschalten oder Abschalten sendet.

8. Last-Management-Verfahren gemäss Anspruch 7, **dadurch gekennzeichnet, dass** mit dem Last-Manager (LM) aufgrund eines bekannten Schaltzustands (zu- oder abgeschaltet) der Verbraucher (V11, V12,..., V21, V22,..., Vnm) gleichen Verbrauchertyps (V1, V2,..., Vn), diese Verbraucher (V11, V12,..., V21, V22,..., Vnm) mittels einem Direktkommando (DK) über die Steuersystemeinheit (SE) und die Lastschaltgeräte (LS1, LS2,..., LSn) zu- bzw. abgeschaltet werden.

9. Last-Management-Verfahren nach Anspruch 7, **dadurch gekennzeichnet, dass** eine Anzahl Zeitzeilen (ZZa) in der ersten Zeitzeileneinheit (ZEa) und eine Anzahl Profilgruppen (PGa) in der ersten Profileinheit (PEa) im Last-Manager (LM) aufgrund von Schaltmöglichkeiten der Verbraucher (V11, V12,..., V21, V22,..., Vnm) ermittelt werden und jeweils gespeichert werden.

10. Last-Management-Verfahren nach Anspruch 8, **dadurch gekennzeichnet, dass** Verbraucher (V11, V12,..., V21, V22,..., Vnm) einer jeweiligen Profilgruppe (PGa, PGb) im Last-Manager (LM) in Profiluntergruppen (PU1, PU2,..., PUn) zusammengefasst werden und die Profiluntergruppen (PU1, PU2,..., PUn) in der ersten Profileinheit (PEa) gespeichert werden.

11. Last-Management-Verfahren nach Anspruch 9 und 10, **dadurch gekennzeichnet, dass** über die Steuersystemeinheit (SE) eine jeweilige Teilmenge (ZZb) der Zeitzeilen (ZZa) in jeweiligen zweiten Zeitzeileneinheiten (ZEb) der Lastschaltgeräte (LS1, LS2,..., LSn) und eine jeweilige Teilmenge (PGb) aller Profilgruppen (PGa) und eine Teilmenge aller Profiluntergruppen (PU1, PU2,..., PUn) in jeweiligen zweiten Profileinheiten (PEb) der Lastschaltgeräte (LS1, LS2,...,LSn) gespeichert werden.

12. Last-Management-Verfahren nach einem der Ansprüche 7 bis 11 , **dadurch gekennzeichnet, dass** die Steuersystemeinheit (SE) als Rundsteuersystemeinheit und/oder als Trägerfrequenzsystemeinheit ausgebildet ist und die Lastschaltgeräte (LS1, LS2,..., LSn) als Rundsteuerempfänger bzw. Trägerfrequenzempfänger.
